# EUROPÄISCHE PATENTANMELDUNG

(11) **EP 1 626 218 A2**
(43) Veröffentlichungstag der Anmeldung: **15.02.2006**
(21) Anmeldenummer: 05017173.5
(22) Anmeldetag: 06.08.2005
(51) Int. Cl.: F16L 47/04, F16L 19/02, F16L 19/028

(54) **Überwurfmutter aus Kunststoff**

(30) Priorität: 14.08.2004 DE 102004039481; 03.12.2004 DE 102004058252
(71) Anmelder: PROTECHNA S.A., 1701 Fribourg (CH)
(72) Erfinder: Schütz, Udo, 56242 Selters / Westerwald (DE)
(74) Vertreter: Pürckhauer, Rolf

(57) **Zusammenfassung**

Überwurfmutter (15) bestehend aus zwei als Kunststoff-Spritzgußteile hergestellten Mutterhälften (15a,15b) mit einem Innengewindesegment (22a,22b) und einem nach innen gerichteten Ringschultersegment (20a,20b). Die beiden Mutterhälften (15a,15b) der Überwurfmutter (15) sind mittels Nut-Federverbindungen (23) beispielsweise auf dem Einlaufstutzen des Hahngehäuses eines Klappenhahns zusammenschiebbar, wobei die eine Mutterhälfte (15a) zwei hakenförmige Enden (24,25) mit nach innen abgeschrägten Klemmschenkeln (26) und jeweils einer Nut (27) zur Aufnahme der an den beiden Enden (28,29) der anderen Mutterhälfte (15b) angeformten Federn (30,31) aufweist. Die beiden Mutterhälften können auch mittels Rastverbindungen miteinander verbunden werden.

## Beschreibung

Die Erfindung betrifft eine Überwurfmutter aus Kunststoff, die aus zwei Mutterhälften auf einem ersten Bauteil zusammengesetzt und auf diesem unverlierbar gehalten wird, wobei die Mutterhälften ein Innengewindesegment und ein nach innen gerichtetes Ringschultersegment zum Angreifen an einem entsprechenden Bund des ersten mit einem zweiten Bauteil zu verschraubenden Bauteils aufweisen, insbesondere zum Anschrauben des Armaturengehäuses einer Entnahmearmatur an dem mit einem Außengewinde versehenen Auslaufstutzen eines Transport- und Lagerbehälters aus Kunststoff oder Metall für Flüssigkeiten und Schüttgut.

Aus der DE 103 01 517 B3 ist ein Transport- und Lagerbehälter für Flüssigkeiten mit einem auf einem palettenartigen Untergestell stehenden Innenbehälter aus Kunststoff und einem äußeren Gitterkorb bekannt. Die Entnahmearmatur des Innenbehälters wird mittels einer unverlierbar auf dem Einlaufstutzen der Armatur angeordneten Überwurfmutter aus Kunststoff der gattungsgemäßen Art, die aus zwei Mutterhälften auf dem Einlaufstutzen zusammengeschweißt wird, an den Auslaufstutzen des Innenbehälters angeschraubt. Bei einer Herstellung der Überwurfmutter aus Aluminium werden die beiden Mutterhälften auf dem Einlaufstutzen der Entnahmearmatur zusammengenietet. Eine derartige unverlierbare Anbringung einer Überwurfmutter auf dem Einlaufstutzen einer Entnahmearmatur ist umständlich und zeitaufwendig und führt zu einer Verteuerung der Herstellungskosten.

Der Erfindung liegt die Aufgabe zugrunde, die gattungsgemäße Überwurfmutter im Hinblick auf eine vereinfachte Montage weiterzuentwickeln.

Diese Aufgabe wird erfindungsgemäß gelöst durch Überwurfmuttern gemäß den Patentansprüchen 1, 3, 4 und 5.

Die Unteransprüche beinhalten vorteilhafte und zweckmäßige Weiterbildungen der Erfindung.

Die erfindungsgemäße Überwurfmutter ist nachstehend anhand von Zeichnungsfiguren erläutert, die folgendes darstellen:
- Fig. 1: eine Längsschnittdarstellung eines Klappenhahns, der mittels einer in den Figuren 2 bis 4 im einzelnen dargestellten Überwurfmutter an den Auslaufstutzen eines Flüssigkeitsbehälters angeschraubt ist, die
- Fign. 2 und 3: perspektivische Darstellungen der getrennten sowie der zusammengesetzten Mutterhälften der zum Anschrauben des Klappenhahns nach Figur 1 verwendeten Überwurfmutter,
- Fig.4: einen Schnitt nach Linie IV-IV der Figur 3, die
- Fign. 5 und 6: perspektivische Darstellungen der getrennten Mutterhälften sowie der zusammengesetzten Mutterhälften einer zweiten Ausführungsform einer Überwurfmutter,
- Fig. 7: einen Schnitt nach Linie VII-VII der Figur 6, die
- Fign. 8 und 9: perspektivische Darstellungen der getrennten Mutterhälften sowie der zusammengesetzten Mutterhälften eines dritten Ausführungsbeispiels einer Überwurfmutter,
- Fig. 10: einen Schnitt nach Linie X-X der Figur 9, die
- Fign. 11 und 12: perspektivische Darstellungen der getrennten Mutterhälften mit zwei Klemmstücken sowie der zusammengesetzten Mutterhälften einer vierten Ausführungsform einer Überwurfmutter,
- Fig. 13: einen Schnitt nach Linie XIII-XIII der Figur 12 und die
- Fign. 14 und 15 sowie 16 und 17: perspektivische Darstellungen der getrennten Mutterhälften sowie der zusammengesetzten Mutterhälften einer fünften und einer sechsten Ausführungsform einer Überwurfmutter.

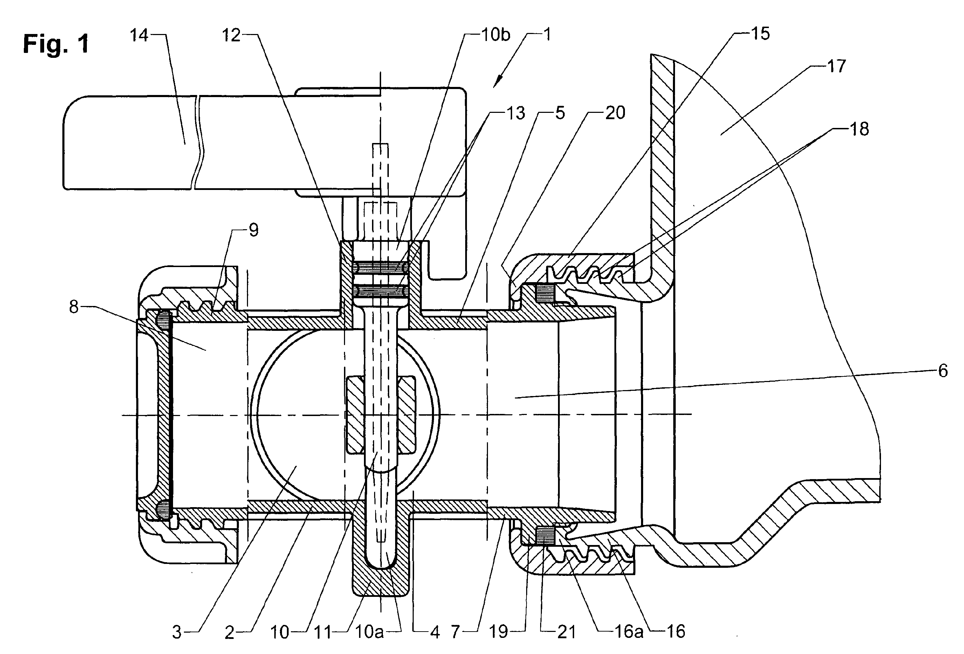

Das aus einem Polyethylen hoher Dichte (PE-HD) hergestellte Hahngehäuse 2 des Klappenhahns 1 nach Fig. 1 nimmt eine Klappenscheibe 3 zum Öffnen und Schließen der zentralen Durchflußöffnung 4 der Gehäusekammer 5 auf, die mit dem Einlaufkanal 6 des Einlaufstutzens 7 und dem Auslaufkanal 8 des Auslaufstutzens 9 des Hahngehäuses 2 in Verbindung steht. Die Klappenscheibe 3 ist exzentrisch an einer Drehwelle 10 befestigt, deren beide Enden 10a, 10b in Lagerstutzen 11, 12 des Hahngehäuses 2 drehbar gelagert sind, wobei das obere Ende 10b der Drehwelle 3 über den Lagerstutzen 12 aus dem Hahngehäuse 2 nach außen vorsteht. Die Drehwelle 10 ist mittels Dichtringen 13 in dem Lagerstutzen 12 nach außen abgedichtet. Auf dem aus dem Hahngehäuse 2 herausragenden Ende 10b der Drehwelle 10 der Klappenscheibe 3 ist ein Handgriff 14 zum Öffnen und Schließen des Klappenhahns 1 angebracht.

Der Klappenhahn 1 ist mittels einer Überwurfmutter 15 aus Kunststoff an dem Auslaufstutzen 16 eines Flüssigkeitsbehälters 17, z.B. eines Kunststoff-Innenbehälters eines Palettenbehälters, befestigt, wobei der Flüssigkeitsbehälter 17 mit dem mit einem Außengewinde 18 versehenen Auslaufstutzen 16 einteilig durch Blasformen hergestellt ist.

Die Überwurfmutter 15 ist zwischen einem Bund 19 des Einlaufstutzens 7 und den Lagerstutzen 11, 12 des Hahngehäuses 2 für die Drehwelle 10 der Klappenscheibe 3 unverlierbar und verschiebbar auf dem Einlaufstutzen des Hahngehäuses 2 gehalten.

Beim Einziehen des Einlaufstutzens 7 des Hahngehäuses 2 in den Auslaufstutzen 16 des Flüssigkeitsbehälters 17 durch das Aufschrauben der auf dem Einlaufstutzen 7 des Hahngehäuses 2 unverlierbar gehaltenen Überwurfmutter 15, die mit einer Ringschulter 20 an dem Bund 19 des Einlaufstutzens 7 angreift, auf dem Auslaufstutzen 16 wird ein auf dem Einlaufstutzen 7 sitzender Dichtring 21 zwischen dem Bund 19 und dem äußeren Ende 16a des Auslaufstutzens 16 des Flüssigkeitsbehälters 17 eingespannt und dadurch das Gehäuse 2 des Klappenhahns 1 gegen den Flüssigkeitsbehälter 17 abgedichtet.

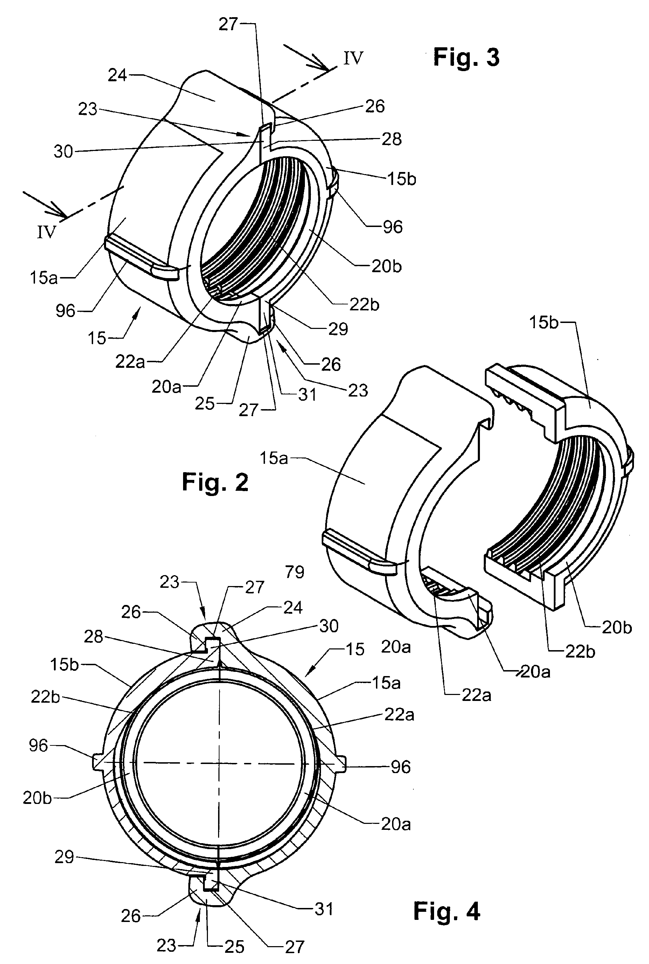

Die Überwurfmutter 15 nach den Figuren 2 bis 4 besteht aus zwei als Kunststoff-Spritzgußteile hergestellten Mutterhälften 15a, 15b mit einem Innengewindesegment 22a, 22b und einem nach innen gerichteten Ringschultersegment 20a, 20b. Die beiden Mutterhälften 15a, 15b der Überwurfmutter 15 sind mittels Nut-Federverbindungen 23 auf dem Einlaufstutzen 7 des Hahngehäuses 2 zusammenschiebbar, wobei die eine Mutterhälfte 15a zwei hakenförmige Enden 24, 25 mit nach innen abgeschrägten Klemmschenkeln 26 und jeweils einer Nut 27 zur Aufnahme der an den beiden Enden 28, 29 der anderen Mutterhälfte 15b angeformten Federn 30, 31 aufweist.

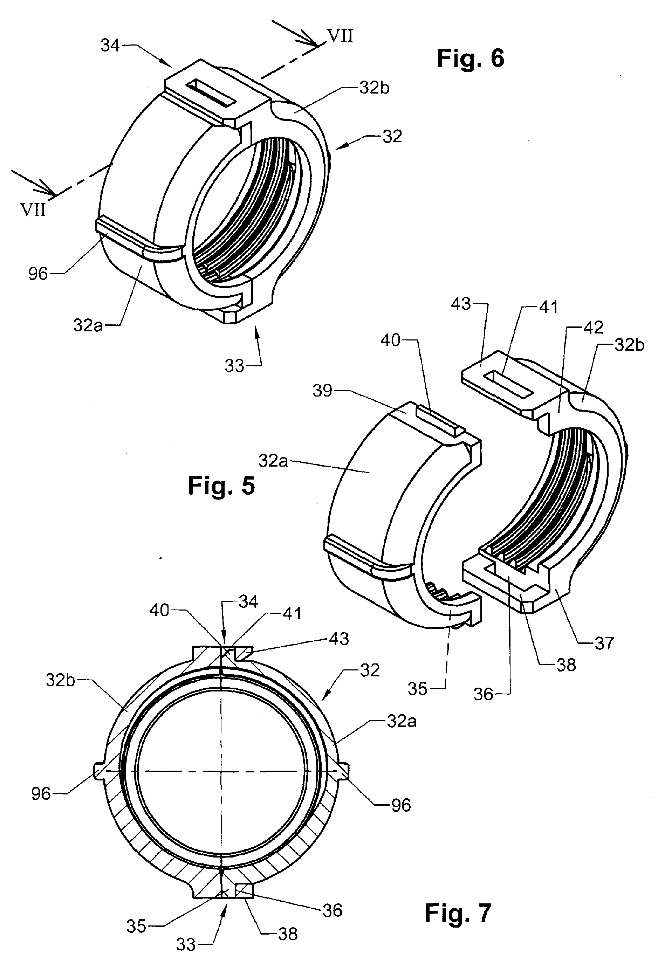

Die Überwurfmutter 32 nach den Figuren 5 bis 7 besitzt zwei Mutterhälften 32a, 32b, die mittels einer Hakenverbindung 33 und einer Clipverbindung 34 zusammengesetzt werden. Die erste Mutterhälfte 32a besitzt ein hakenförmiges Ende 35 zum Einhaken in eine entsprechende Durchstecköffnung 36 einer an dem einen Ende 37 der zweiten Mutterhälfte 32b angeformten Lasche 38 und an dem anderen Ende 39 der ersten Mutterhälfte 32a ist ein Nocken 40 angeformt, der in eine entsprechende Öffnung 41 einer an dem anderem Ende 42 der zweiten Mutterhälfte 32b angeformten Lasche 43 einrastet.

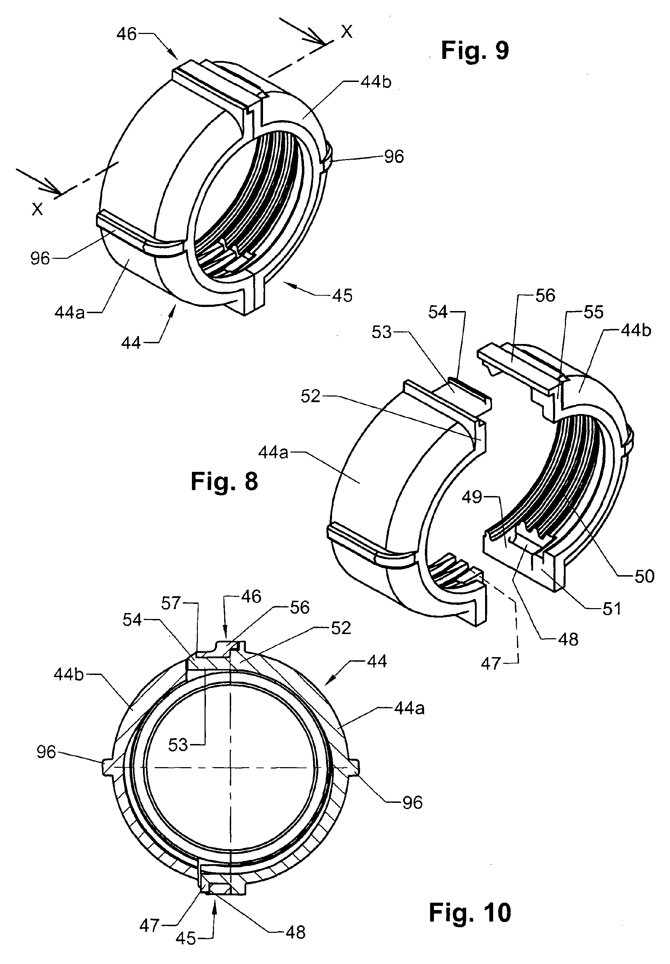

Die Mutterhälften 44a, 44b der Überwurfmutter 44 nach den Figuren 8 bis 10 werden mittels einer Hakenverbindung 45 und einer Clipverbindung 46 miteinander verbunden. Die erste Mutterhälfte 44a ist mit einem hakenförmigen Ende 47 zum Einhaken in eine Durchstecköffnung 48 einer Aussparung 49 des Innengewindesegments 50 im einen Ende 51 der zweiten Mutterhälfte 44b versehen und an das andere Ende 52 der ersten Mutterhälfte 44a ist eine Rastzunge 53 mit einer Rastkante 54 angeformt. Beim Zusammensetzen der beiden Mutterhälften 44a, 44b untergreift die Rastzunge 53 einen an das andere Ende 55 der zweiten Mutterhälfte 44b angeformten, abgestuften Haltesteg 56 und verrastet mit der Rastkante 54 mit der Rückseite 57 des Haltesteges 56.

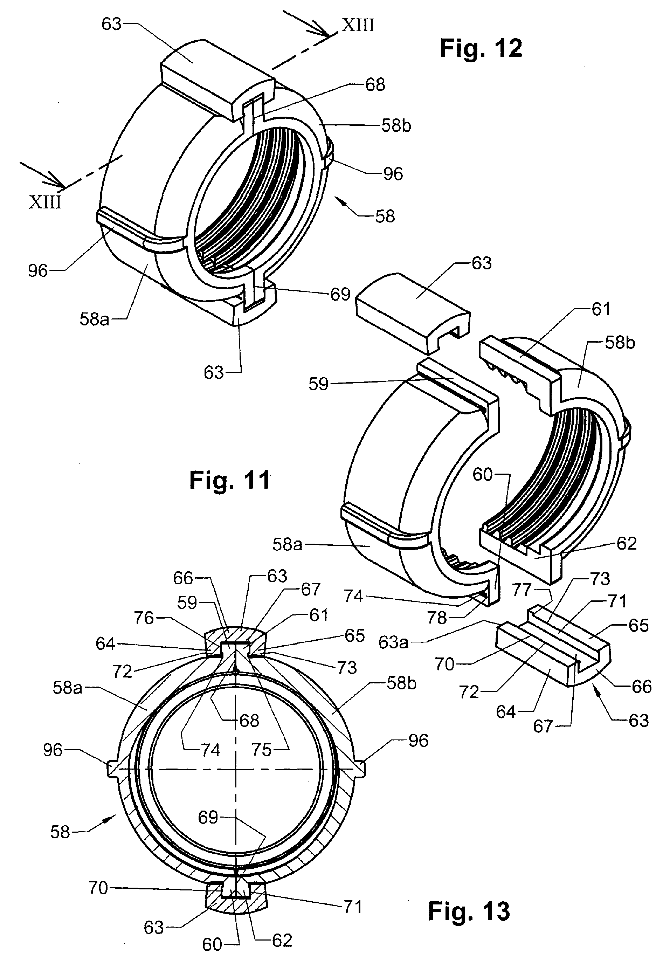

Die in den Figuren 11 bis 13 dargestellte Überwurfmutter 58 besteht aus zwei Mutterhälften 58a, 58b mit an den Enden angeformten Stoßleisten 59, 60; 61, 62 sowie zwei Klemmstücken 63 mit einer durch zwei Klemmschenkel 64, 65 und einen Verbindungssteg 66 gebildeten Nut 67 zum Aufschieben auf die Federn 68, 69, die jeweils von zwei Stoßleisten 59, 61 und 60, 62 der zusammengefügten Mutterhälften 58a, 58b gebildet werden.

Zur Sicherung der Klemmstücke 63 gegen Lösen sind an die Innenkanten 70, 71 der Klemmschenkel 64, 65 der Klemmstücke 63 dünne Stege 72, 73 angeformt, die beim Aufschieben der Klemmstücke 63 auf die durch die Stoßleisten 59, 61; 60, 62 der beiden Mutterhälften 58a, 58b gebildeten Federn 68, 69 mit Rillen 74, 75 in den Außenkanten 76 der Stoßleisten 59, 61; 60, 62 in Eingriff gelangen.

Die Stege 72, 73 sind am Aufschiebeende 63a der Klemmstücke 63 zur Bildung eines Anschlags 77 abgebrochen, der mit einem am Ende der Rillen 74, 75 in den Stoßleisten 59, 60; 61, 62 der Mutterhälften 58a, 58b gebildeten Gegenanschlag 78 zur genauen Positionierung der Klemmstücke 63 beim Aufschieben auf die Federn 68, 69 der zusammengefügten Mutterhälften 58a, 58b und zur Sicherung der Klemmstücke 63 zusammenwirken.

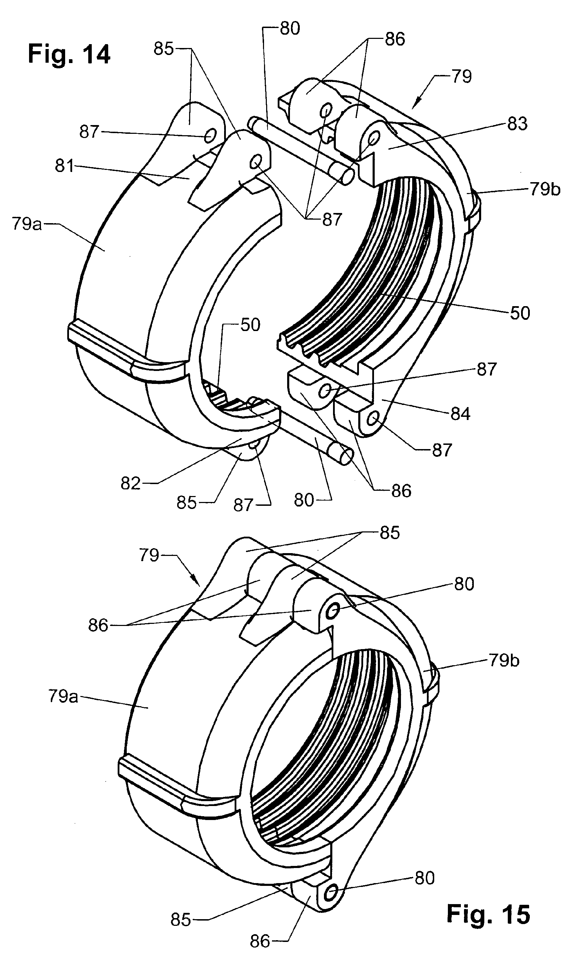

Die in den Figuren 14 und 15 dargestellte Überwurfmutter 79 weist zwei mittels Verbindungsstiften 80 zusammensetzbare Mutterhälften 79a, 79b mit jeweils einem Innengewindesegment 50 auf, an deren beiden Enden 81, 82; 83, 84 jeweils zwei Ansätze 85; 86 mit einem Durchsteckloch 87 angeformt sind, die in Umfangsrichtung über die Enden 81, 82; 83, 84 vorstehen. Die Ansätze 85 der einen Mutterhälfte 79a sind gegenüber den Ansätzen 86 der anderen Mutterhälfte 79b derart versetzt, daß beim Zusammenfügen der Mutterhälften 79a, 79b die Ansätze 85, 86 ineinandergreifen und deren Durchstecklöcher 87 zum Einstecken eines Verbindungsstiftes 80 miteinander fluchten.

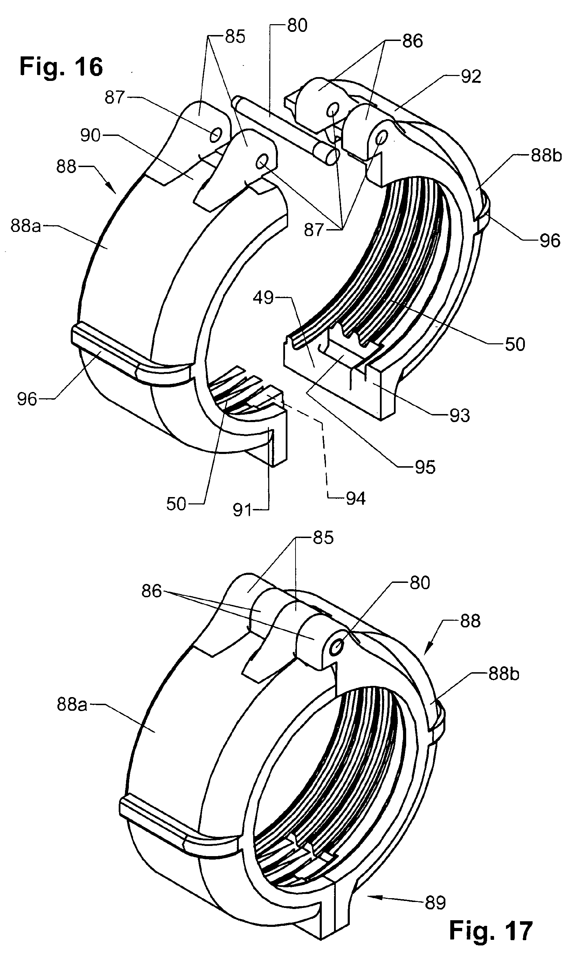

Die Überwurfmutter 88 gemäß den Figuren 16 und 17 besteht aus zwei mittels eines Verbindungsstiftes 80 und einer Hakenverbindung 89 zusammensetzbaren Mutterhälften 88a, 88b mit jeweils einem Gewindesegment 50. An die einen Enden 90, 92 der beiden Mutterhälften 88a, 88b sind Ansätze 85, 86 mit einem Durchsteckloch 87 angeformt, die in Umfangsrichtung über die Enden 90, 92 der Mutterhälften 88a, 88b vorstehen. Die Ansätze 85 der einen Mutterhälfte 88a sind gegenüber den Ansätzen 86 der anderen Mutterhälfte 88b derart versetzt, daß beim Zusammenfügen der Mutterhälften 88a, 88b die Ansätze 85, 86 ineinandergreifen und deren Durchstecklöcher 87 zum Einsetzen eines Verbindungsstiftes 80 miteinander fluchten. An das andere Ende 91 der einen Mutterhälfte 88a ist ein Haken 94 zum Einhaken in eine Durchstecköffnung 95 einer Aussparung 49 des Gewindesegments 50 im anderen Ende 93 der zweiten Mutterhälfte 88b angeformt.

Die verschiedenen Überwurfmuttern 15, 32, 44, 58, 88 sind auf dem Umfang mit Greifrippen 96 als Montagehilfe versehen.

## Patentansprüche

1. Überwurfmutter aus Kunststoff, die aus zwei Mutterhälften auf einem ersten Bauteil zusammengesetzt und auf diesem unverlierbar gehalten wird, wobei die Mutterhälften ein Innengewindesegment und ein nach innen gerichtetes Ringschultersegment zum Angreifen an einem entsprechenden Bund des ersten mit einem zweiten Bauteil zu verschraubenden Bauteils aufweisen, insbesondere zum Anschrauben des Armaturengehäuses einer Entnahmearmatur an dem mit einem Außengewinde versehenen Auslaufstutzen eines Transport- und Lagerbehälters aus Kunststoff oder Metall für Flüssigkeiten und Schüttgut, **gekennzeichnet durch** zwei zusammenschiebbare Mutterhälften (15a, 15b) mit Nut-Federverbindungen (23), wobei die eine Mutterhälfte (15a) zwei hakenförmige Enden (24, 25) mit jeweils einer Nut (27) zur Aufnahme der an den beiden Enden (28, 29) der anderen Mutterhälfte (15b) angeformten Feder (30, 31) aufweist.

2. Überwurfmutter nach Anspruch 1, **dadurch gekennzeichnet, daß** die eine Mutterhälfte (15a) zwei hakenförmige Enden (24, 25) mit nach innen abgeschrägten Klemmschenkeln (26) aufweist.

3. Überwurfmutter nach dem Oberbegriffs des Anspruchs 1, **gekennzeichnet durch** zwei mittels einer Hakenverbindung (33) und einer Clipverbindung (34) zusammensetzbare Mutterhälften (32a, 32b), wobei die erste Mutterhälfte (32a) ein hakenförmiges Ende (35) zum Einhaken in eine entsprechende Durchstecköffnung (36) einer an dem einen Ende (37) der zweiten Mutterhälfte (32b) angeformten Lasche (38) aufweist und an dem anderen Ende (39) der ersten Mutterhälfte (32a) ein Nocken (40) angeformt ist, der in eine entsprechende Öffnung (41) einer an dem anderen Ende (42) der zweiten Mutterhälfte (32b) angeformten Lasche (43) einrastet.

4. Überwurfmutter nach dem Oberbegriff des Anspruchs 1, **gekennzeichnet durch** zwei mittels einer Hakenverbindung (45) und einer Clipverbindung (46) zusammensetzbare Mutterhälften (44a, 44b), wobei die erste Mutterhälfte (44a) ein hakenförmiges Ende (47) zum Einhaken in eine Durchstecköffnung (48) einer Aussparung (49) des Gewindesegments (50) im einen Ende (51) der zweiten Mutterhälfte (44b) aufweist und an das andere Ende (52) der ersten Mutterhälfte (44a) eine Rastzunge (53) mit einer Rastkante (54) angeformt ist, wobei beim Zusammensetzen der beiden Mutterhälften (44a, 44b) die Rastzunge (53) einen an das andere Ende (55) der zweiten Mutterhälfte (44b) angeformten Haltesteg (56) untergreift und mit der Rastkante (54) mit der Rückseite (57) des Haltesteges (56) verrastet.

5. Überwurfmutter nach dem Oberbegriff des Anspruchs 1 **gekennzeichnet durch** zwei Mutterhälften (58a, 58b) mit an den Enden angeformten Stoßleisten (59, 60) sowie zwei Klemmstücke (63) mit einer **durch** zwei Klemmschenkel (64, 65) und einen Verbindungssteg (66) gebildeten Nut (67) zum Aufschieben auf die Federn (68, 69), die jeweils von zwei Stoßleisten (59, 61; 60, 62) der zusammengefügten Mutterhälften (58a, 58b) gebildet werden.

6. Überwurfmutter nach Anspruch 5, **gekennzeichnet durch** eine Sicherung der Klemmstücke (63) gegen Lösen **durch** an die Innenkanten (70, 71) der Klemmschenkel (64, 65) der Klemmstücke (63) angeformte dünne Stege (72, 73), die beim Aufschieben der Klemmstücke (63) auf die **durch** die Stoßleisten (59, 61; 60, 62) der beiden Mutterhälften (58a, 58b) gebildeten Federn (68, 69) mit Rillen (74, 75) in den Außenkanten (76) der Stoßleisten (59, 61; 60, 62) in Eingriff gelangen.

7. Überwurfmutter nach Anspruch 6, **dadurch gekennzeichnet, daß** die Stege (72, 73) am Aufschiebeende (63a) der Klemmstücke (63) zur Bildung eines Anschlags (77) abgebrochen sind, der mit einem am Ende der Rillen (74, 75) in den Stoßleisten (59, 60; 61, 62) der Mutterhälften (58a, 58b) gebildeten Gegenanschlag (78) zur genauen Positionierung der Klemmstücke (63) beim Aufschieben derselben auf die Federn (68, 69) der zusammengefügten Mutterhälften (58a, 58b) und zur Sicherung der Klemmstücke (63) zusammenwirkt.

8. Überwurfmutter nach dem Oberbegriff des Anspruchs 1, **gekennzeichnet durch** zwei mittels Verbindungsstiften (80) zusammensetzbare Mutterhälften (79a, 79b) mit jeweils einem Innengewindesegment (50), wobei an die beiden Enden (81, 82; 83, 84) der Mutterhälften (79a, 79b) Ansätze (85, 86) mit einem Durchsteckloch (87) angeformt sind, die in Umfangsrichtung über die Enden (81, 82; 83, 84) der Mutterhälften (79a, 79b) vorstehen, und wobei die Ansätze (85) der einen Mutterhälfte (79a) gegenüber den Ansätzen (86) der anderen Mutterhälfte (79b) derart versetzt sind, daß beim Zusammenfügen der Mutterhälften (79a, 79b) die Ansätze (85, 86) ineinandergreifen und deren Durchstecklöcher (87) zum Einstecken eines Verbindungsstiftes (80) miteinander fluchten.

9. Überwurfmutter nach dem Oberbegriff des Anspruchs 1, **gekennzeichnet durch** zwei mittels eines Verbindungsstiftes (80) und einer Hakenverbindung (89) zusammensetzbare Mutterhälften (88a, 88b) mit jeweils einem Innengewindesegment (50), wobei an die einen Enden (90, 92) der beiden Mutterhälften (88a, 88b) Ansätze (85, 86) mit einem Durchsteckloch (87) angeformt sind, die in Umfangsrichtung über die Enden (90, 92) der Mutterhälften (88a, 88b) vorstehen, und wobei die Ansätze (85) der einen Mutterhälfte (88a) gegenüber den Ansätzen (86) der anderen Mutterhälfte (88b) derart versetzt sind, daß beim Zusammenfügen der Mutterhälften (88a, 88b) die Ansätze (85, 86) ineinandergreifen und deren Durchstecklöcher (87) zum Einstecken eines Verbindungsstiftes (80) miteinander fluchten, sowie **durch** einen an das andere Ende (91) der einen Mutterhälfte (88a) angeformten Haken (94) zum Einhaken in eine Durchstecköffnung (95) einer Aussparung (49) des Gewindesegments (50) im anderen Ende (93) der zweiten Mutterhälfte (88b).
